# EUROPÄISCHE PATENTSCHRIFT

(11) **EP 2 117 774 B1**
(45) Veröffentlichungstag und Bekanntmachung des Hinweises auf die Patenterteilung: **12.01.2011**
(21) Anmeldenummer: 08708835.7
(22) Anmeldetag: 08.02.2008
(51) Int. Cl.: B24B 13/00

(54) **VERFAHREN ZUR HERSTELLUNG EINES BRILLENGLASES**
METHOD FOR PRODUCING A SPECTACLE LENS
PROCÉDÉ POUR PRODUIRE UN VERRE DE LUNETTES

(30) Priorität: 08.02.2007 DE 102007007006
(43) Veröffentlichungstag der Anmeldung: 18.11.2009
(73) Patentinhaber: Schneider GmbH + Co. KG, 35239 Steffenberg (DE)
(72) Erfinder: SCHNEIDER, Gunter, 35037 Marburg (DE); HUTTENHUIS, Stephan, 35041 Marburg (DE)
(74) Vertreter: Thews, Gustav
(86) Internationale Anmeldenummer: PCT/EP2008/051568
(87) Internationale Veröffentlichungsnummer: WO 2008/096007

(56) Entgegenhaltungen:
- DE-A1- 10 318 597

## Beschreibung

Die Erfindung bezieht sich auf ein Verfahren zum Herstellen eines Halbzeugs für ein Plus- oder Minus-Brillenglases mit einer torisch oder a-torisch geformten, in der Regel konkaven, als Rezeptfläche ausgebildeten Rückseite, die in der Regel einen Zylinderradius r_{Z} und einen Basisradius r_{B} aufweist, ausgehend von einem Rohling mit einem Durchmesser D_{R} mit einer in der Regel konvexen, einen Krümmungsradius r_{V} aufweisenden Vorderseite, wobei der Rohling zwecks Bearbeitung der Rückseite auf der Vorderseite aufgeblockt und einer spanenden, also fräsenden oder vorzugsweise drehenden Bearbeitung zugeführt wird. Die Vorderseite des Rohlings ist in der Regel fertig vorgeformt und nicht mehr bearbeitet, weshalb der Rohling im Stand der Technik auch als Halbfertigteil bezeichnet wird. Ausgehend von diesem geformten Rohzustand wird der Rohling zumindest auf der Rückseite bearbeitet. Die dabei erreichte Zwischenstufe nach der Bearbeitung der Rezeptfläche wird im Folgenden als Halbzeug bezeichnet. Aus dem Halbzeug entsteht nach dem Polieren und der Randbearbeitung sowie verschiedener Beschichtungsverfahren das fertige Brillenglas. Die atorische Form schließt insbesondere Gleitsichtflächen ein, die kontinuierlich ändernde Krümmungen einer progressiven Brechfläche beinhalten. Vorgenannte Gleitsichtflächen sind der torischen Form überlagert, so dass sich ähnliche Verfahrensweisen für die Herstellung wie bei torischen Flächen ergeben. Entsprechendes gilt für die Bearbeitung von Rohlingen, deren konkave Rückseite fertig ist. Diese werden auf der Rückseite aufgeblockt und auf der Vorderseite zwecks Herstellung der Rezeptfläche bearbeitet.

Es ist bereits ein Verfahren für die Herstellung eines Brillenglases aus der DE 38 17 850 A1 bekannt. Zur Herstellung des Brillenglases wird dabei zunächst die exakte Form der Brillenfassung sowie der Durchblick- und der Aufspannpunkt relativ zu einem Koordinatensystem für das Brillenglas erfasst. Der Querschnitt des Brillenglases wird dann in n-Schnitten bezogen auf das Koordinatensystem berechnet, wobei diese Berechnung so lange wiederholt wird, bis bei durch die Brillenfassung vorgegebener minimaler Randdicke ein optimiertes Brillenglas mit minimaler Mittendicke berechnet ist. Nach dem Ausrichten und Aufblocken des Rohglases wird das Brillenglas dann entsprechend der zuvor ermittelten Werte gefräst, geschliffen und poliert.

Ferner ist ein Verfahren zur Herstellung von Brillengläsern aus der DE 103 18 597 A1 bekannt. Bei diesem Verfahren werden Halbfertigteile mit optisch wirksamer Linsenrückseite benutzt, an der sie auf Blockstücken aufgeblockt werden. Anschließend werden die Teile in Spannvorrichtungen von CNC-gesteuerten Bearbeitungsmaschinen eingelegt. Dort findet die mechanische Bearbeitung der konvexen Linsenvorderseite statt. Bei allen mechanischen Bearbeitungsvorgängen zur Herstellung der optisch wirksamen konvexen Linsenvorderseite ist das Werkstück aufgeblockt. Seine runde Form, die dem Durchmesser des Halbfertigteils entspricht, bleibt dabei erhalten. Während der mechanischen Bearbeitung findet eine Dickenoptimierung statt und es wird eine Werkstückkontur erzeugt, die so geformt ist, dass sie sich von der Werkstückmitte beginnend und nach außen fortschreitend nach unten neigt, wobei die konvexe Linsenvorderseite gebildet wird. Diese endet an der virtuellen Umrisslinie. Ab der virtuellen Umrisslinie kehrt sich die Krümmungsrichtung der Werkstückkontur um, wodurch bei weiterem Fortschreiten nach außen die Werkstückkontur wieder ansteigt, wobei ein konkaver ringförmiger Stützrand gebildet wird.

Zum weiteren Stand der Technik und zum Hintergrund der erfindungsgemäßen Verfahrensweise wird auf die Ausführungen der DE 103 18 597 A1, Absätze 2 bis 25, explizit verwiesen.

Die Lehre der DE 103 18 597 A1 beschäftigt sich zum einen mit der Dickenproblematik, insbesondere der Randdickenproblematik des Glases gemäß der DE 38 17 850 A1. Ergänzend wird in der DE 103 18 597 A1 die Bereitstellung eines Stützrandes beschrieben, der anschließend an eine virtuelle Umrisslinie des Glases, d. h. eine virtuelle Randlinie des Glases, vorgesehen wird, um die Stabilität im Bereich dieses virtuellen Randes zu erhöhen und die Qualität der Flächenbearbeitung, insbesondere in dieser virtuellen Randzone zu erhöhen. Hierzu verzichtet die Lehre der DE 103 18 597 A1 auf eine Randbearbeitung des Brillenglases. Der Durchmesser bleibt unverändert. Das Werkstück soll während des gesamten Fertigungsablaufs die kreisrunde Form und den Durchmesser des Halbfertigteils behalten, so dass standardisierte Spannwerkzeuge benutzt werden können. Die Krümmung der Rezeptfläche wird bei der Ausbildung des Stützrandes nicht berücksichtigt. Die Rezeptfläche ist durch die virtuelle Umrisslinie begrenzt und genauso groß wie das gewünschte Brillenglas.

Der Erfindung liegt die Aufgabe zugrunde, ein verbessertes Herstellungsverfahren für Brillengläser bereitzustellen.

Gelöst wird die Aufgabe erfindungsgemäß dadurch, dass die Rezeptfläche aufgrund der Größe nur über einen Teil des Durchmessers D_{R} hergestellt wird, wobei abweichend von der Krümmung der Rezeptfläche in den Bereichen der Rückseite, in denen aufgrund der Generierung des Basisradius r_{B} die Dicke h_{B} des Randes dünner werden würde als ein Mindestmaß hₘᵢₙ, ein Aufmaß belassen und damit eine Nebenfläche erzeugt wird, so dass die Dicke des so gebildeten Halbzeugs an keiner Stelle das Mindestmaß hₘᵢₙ unterschreitet und die Dicke h_{B} des Randes maximal fünf mal so dick wird wie eine dünnste Stelle S des Halbzeugs. Durch Gewährleistung des Mindestmaßes hₘᵢₙ bzw. des Aufmaßes, das von der Dicke des Halbzeugs abhängig ist, wird die Stabilität des Linsenrohlings im Randbereich über den gesamten Umfang gewährleistet. Ferner kann trotz Optimierung der Dicke des Halbzeugs die runde Form des Rohlings beibehalten werden. Zwecks Zentrierung des aufgeblockten Rohlings relativ zum Blockstück ist in der Regel eine Bearbeitung des Umfangs bzw. Durchmessers notwendig, damit bestehende Unwuchten oder Oberflächenfehler am Rand beseitigt werden. Aufgrund der erhöhten Stabilität bzw. Steifigkeit des bearbeiteten Rohlings im Randbereich kann die nachgeschaltete Polierbearbeitung genauer erfolgen und die Gefahr von Ausbrüchen des Randes, die zu scharfen Kanten führen, wird verhindert. Insgesamt wird die Dicke des Rohlings jedoch auch im Bereich des Aufmaßes auf ein Minimum reduziert, damit das so hergestellte Halbzeug ein möglichst geringes Gewicht aufweist.

Das Aufmaß, welches auch als Übermaß bezeichnet werden kann, wird durch einen mit Bezug zur Rezeptfläche reduzierten Materialabtrag im Randbereich der Rückseite erzeugt, so dass eine Mindestranddicke des Halbzeugs gewährleistet ist. Die Rückseite wird in diesem erfindungsgemäßen Randbereich also nicht bis auf die Rezeptfläche abgetragen. Das Aufmaß bildet die so genannte Nebenfläche, die im Randbereich sozusagen oberhalb der äußeren randnahen Rezeptfläche angeordnet ist und an die innere Rezeptfläche anschließt. Die innere Rezeptfläche ist dabei in der Regel größer als das gewünschte Brillenglas. Das muss jedoch nicht so sein. Die erfindungsgemäße Nebenfläche kann insbesondere bei großen Brillengläsern auch Teil des fertigen Brillenglases sein, d. h. den Randbereich des fertigen Brillenglases bilden. Somit kann das Brillenglas als Ganzes sehr dünn gestaltet werden, wobei in den kritischen Randbereichen im Bereich des Basisradius r_{B} das erfindungsgemäße Aufmaß zur Gewährleistung eines ausreichend dicken Glasrandes belassen wird. Die Nebenfläche im Randbereich und die innere Rezeptfläche bilden die erfindungsgemäße Rückseite des bearbeiteten unpolierten und runden Halbzeugs. Die Höhe des Aufmaßes ist abhängig von dem Verhältnis der Krümmungen der Vorder- und der Rückseite des Halbzeugs.

Des Weiteren entsteht durch die Beibehaltung der runden Form bei rotierendem Rohling, insbesondere während der drehenden Bearbeitung, keine Unterbrechung des Schnittes im Randbereich, so dass die mit einer Schnittunterbrechung einhergehenden Nachteile vermieden werden.

In diesem Zusammenhang kann es von Vorteil sein, **wenn** der Rohling auf einen Durchmesser D = D_{Z} des Halbzeugs reduziert wird, wobei der Durchmesser D_{Z} derart gewählt wird, dass unter Berücksichtigung der Größe der zu generierenden Rezeptfläche eine Dicke h_{Z} des Randes des Halbzeugs in einer Ebene E_{Z} des Zylinderradius r_{Z} das für die Bearbeitung erforderliche Mindestmaß hₘᵢₙ nicht unterschreitet. Hierdurch wird erreicht, dass der Durchmesser des zu bearbeitenden Rohlings, insbesondere zur Generierung der Rezeptfläche, auf ein Mindestmaß reduziert wird und gleichzeitig unter Beibehaltung einer runden Form die Randdicke hₘᵢₙ gewährleistet ist. Mit der Minimierung des Durchmessers ergeben sich die mit einer reduzierten Masse des Rohlings einhergehenden Vorteile.

Aufgrund des im Bereich des Basisradius r_{B} erfindungsgemäß vorgesehenen Aufmaßes, welches sich bei torischen Flächen in Umfangsrichtung sichelförmig bis hin zur Ebene des Zylinderradius r_{Z}, also in Umfangsrichtung jeweils um 90 ° in beide Richtungen erstreckt, wird mit Bezug zur axialen Richtung der Höhenunterschied zwischen dem Zylinder- und dem Basisradius r_{Z}, r_{B} verringert, so dass bei der drehenden Bearbeitung, d. h. bei der damit einhergehenden Oszillationsbewegung während einer Umdrehung des Rohlings, der dafür erforderliche Hub minimiert wird. Damit einher geht eine Erhöhung der Drehzahl während dieser Bearbeitung, da die für die oszillierende Bewegung eingesetzten Motoren bezüglich ihrer maximalen Hubfrequenz von der Höhe des Hubes abhängig sind. Das heißt die Motoren können bei kleinem Hub mit höherer Frequenz betrieben werden, so dass sich daraus eine höhere Drehzahl bei der bearbeiteten Rezeptfläche und damit eine schnellere Bearbeitung des Rohlings im Ganzen ergibt.

Vorteilhaft kann es hierzu auch sein, **wenn** für das Mindestmaß hₘᵢₙ eine Größe zwischen 0,3 mm und 2 mm oder 1 mm vorgegeben wird. Das Mindestmaß gewährleistet die erforderliche Stabilität der Linse im Bereich des Linsenrandes zum einen und gewährleistet zum anderen die Schonung des Polierwerkzeuges. Der Rand des Rohlings wirkt somit für sich nicht als Schneidkante.

Zudem kann es von Vorteil sein, **wenn** die Dicke h_{B} des Randes des Halbzeugs in der Ebene E_{B} des Basisradius r_{B} das Maß 2 mm bis 6 mm nicht überschreitet. Somit weist das so hergestellte Halbzeug ein möglichst geringes Gewicht auf. Die Nebenfläche und die Rezeptfläche sollten nicht nur stetig ineinander übergehen sondern auch möglichst geringe Krümmungsunterschiede aufweisen, damit bei dem Polieren das Werkzeug bei dem Auflaufen auf die Nebenfläche nicht von der Rezeptfläche abhebt.

Vorteilhaft kann es hierzu auch sein, **wenn** die Dicke h_{B} des Randes des Halbzeugs in der Ebene E_{B} des Basisradius r_{B} maximal zwei, drei oder vier mal so dick wird wie die dünnste Stelle S des Halbzeugs. Dies stellen weiter Maßnahmen dar, die Gewichtsersparnis des Halbzeugs zu gewährleisten.

Hierzu kann es vorteilhaft sein, **wenn** die Dicke des hergestellten Halbzeugs im Bereich des Aufmaßes bzw. der Nebenfläche konstant und gleich dem Mindestmaß hₘᵢₙ ist. Bei dem Mindestmaß hₘᵢₙ handelt es sich vorzugsweise um die Dicke h_{Z} des Halbzeugs in der Ebene E_{Z} des Zylinderradius r_{Z}.

Eine zusätzliche Möglichkeit kann gemäß einer Weiterbildung sein, **dass** zwischen der Rezeptfläche und der an die Rezeptfläche in radialer Richtung anschließenden, das Aufmaß aufweisenden Nebenfläche ein stetiger Übergang oder eine zusätzliche stetige Zwischenfläche vorgesehen wird. Ein stetiger Übergang zwischen der Rezeptfläche und der Nebenfläche gewährleistet eine optimale Bearbeitung des Randes der inneren Rezeptfläche, da an den Rand der Rezeptfläche erfindungsgemäß die Nebenfläche stetig anschließt. Der Rand der Rezeptfläche entspricht in vorteilhafter Weise dem virtuellen Rand des Brillenglases, je nach Information über das zu erstellende Brillenglas und in Abhängigkeit eines vorzusehenden Zuschlagsmaßes. Etwaige Einflüsse, wie sie bei der Bearbeitung einer Randzone einer Linsenfläche entstehen, werden somit gänzlich durch das Vorhandensein der an die Rezeptfläche angrenzenden Nebenfläche verhindert. Dadurch, dass die Nebenfläche keine wesentlich kleinere Krümmung als der Zylinderradius aufweist, ist ein optimales Polieren der Randzone der Rezeptfläche möglich. Der im Stand der Technik vorgesehene Stützrand, der eine entgegengesetzte Krümmung der Fläche aufweist, würde zu einem Abheben des Polierwerkzeugs von der Rezeptfläche beim Auflaufen auf die Nebenfläche führen.

Daneben kann es vorteilhaft sein, **wenn** die radiale Ausdehnung A_{B} der das Aufmaß aufweisenden Nebenfläche im Bereich des Basisradius r_{B} größer wird als im Bereich des Zylinderradius r_{Z} und/oder dass die Ausdehnung A_{B} über den Umfang unterschiedlich groß und/oder sichelförmig ausgebildet wird. Das Aufmaß ist abhängig von der Form bzw. Dicke der Rezeptfläche.

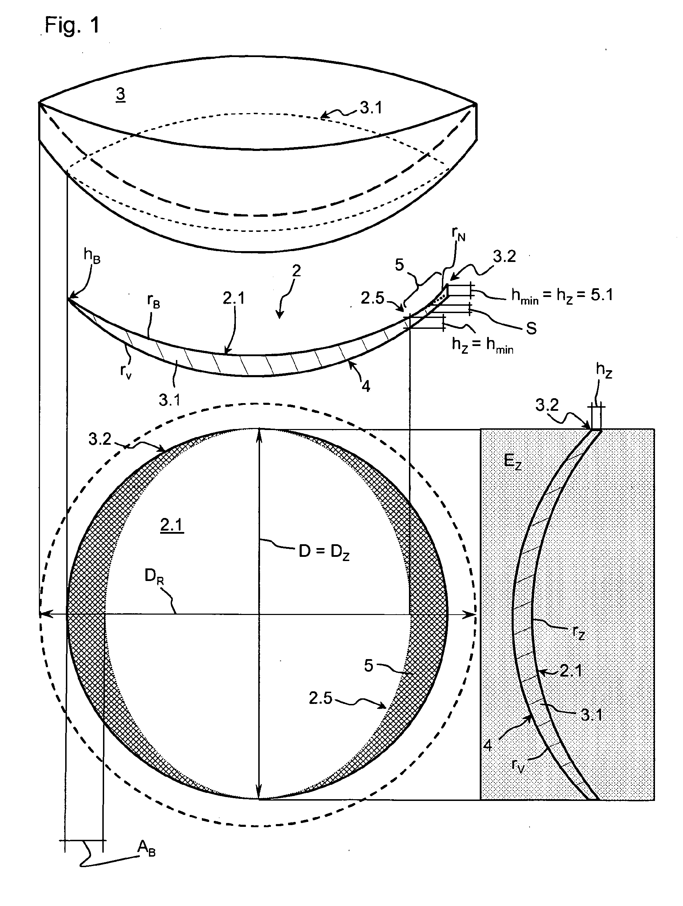

Ferner kann es vorteilhaft sein, **wenn** die Nebenfläche einen Krümmungsradius r_{N} aufweist, wobei der Krümmungsradius r_{N} kleiner ist, als der jeweilige Krümmungsradius der Rezeptfläche. Bei einer torischen Rezeptfläche, die einen Zylinder- und einen Basisradius r_{Z}, r_{B} aufweist, sind der Zylinder- und der Basisradius r_{Z}, r_{B} um 90 ° versetzt. Mit Bezug auf die Umfangsrichtung überlagern sich Zylinder- und Basisradius in dem Bereich zwischen beiden Radien. Gegebenenfalls kommt zu dieser Überlagerung auch noch ein atorischer Flächenanteil. Der jeweilige Krümmungsradius r_{R} der Rezeptfläche ist demnach mit Ausnahme der beiden Zonen von Zylinderradius r_{Z} und Basisradius r_{B}, eine Überlagerung vorgenannter Radien inklusive eines möglichen torischen Flächenanteils. Da es sich um so genannte Plus-Gläser handelt, bei denen der Zylinder- und Basisradius r_{Z}, r_{B} größer ist als der Grundradius r_{V} der Vorderseite des Rohlings, ist ein solcher Rohling bzw. eine solche Linse grundsätzlich in der Mitte dicker und läuft zum Rand hin dünn aus. Zwecks Gewährleistung der erfindungsgemäßen Nebenfläche bzw. des Aufmaßes ist es deshalb notwendig, dass der Krümmungsradius zumindest im Bereich des Übergangs kleiner ist als der der Rezeptfläche, so dass sich das Brillenglas zum Rand wieder gemäß Figur 1 verdickt. Dabei ist der Krümmungsradius r_{N} in der Regel nicht nur im Bereich des Übergangs, sondern grundsätzlich im Bereich der gesamten Nebenfläche kleiner als der der Rezeptfläche. Die Nebenfläche kann auch dem Krümmungsradius r_{V} der Vorderseite oder dem Zylinderradius r_{Z} nach geformt sein. Sie kann auch geradlinig verlaufen. Der stetige Übergang ist jedoch vorteilhaft und zu berücksichtigen.

Vorteilhaft kann es auch sein, **wenn** für das herzustellende Brillenglas eine definierte Brillenglasform vorgesehen ist, wobei bei der Berechnung des Durchmessers D die Brillenglasform berücksichtigt wird. Bei der Brillenglasform handelt es sich um die spätere Gestellfläche, d. h. die fertige Brillenglasform, die dann auch der gewünschten Rezeptfläche entspricht. Bei der Herstellung eines bezogen auf die Gestellfläche kleinen Brillenglases kann dies erfindungsgemäß bei der Herstellung berücksichtigt werden, so dass die erfindungsgemäße Reduktion des Rohling-Durchmessers auf die effektiv notwendige Größe des Brillenglases unter Berücksichtigung eines etwaigen Sicherheitsmaßes erfolgen kann. Die Nebenfläche kann dabei Teil des Brillenglases sein.

Von besonderer Bedeutung kann für die vorliegende Erfindung sein, **wenn** aus dem Halbzeug ein Plus-Glas hergestellt wird, wobei die Dicke h_{M} in der Mitte des Brillenglases minimiert wird. Entsprechend der erfindungsgemäß minimierten Größe des Rohlings bezogen auf seinen Durchmesser kann das verwendete Blockstück an diesen Durchmesser optimal angepasst werden, so dass eine maximale Unterstützung des runden Rohlings möglich ist. Die erfindungsgemäß gewährleistete Randdicke hₘᵢₙ kann somit in Bezug auf den Durchmesser D_{R} des Blockstücks und die erforderliche Stabilität des überstehenden Randes optimiert werden. Bei der erfindungsgemäßen Minimierung des Durchmessers kann die Dicke h_{M} in der Mitte des Brillenglases, also die Gesamtdicke des Brillenglases, insbesondere bei der Herstellung eines Plus-Glases reduziert werden, wobei gleichzeitig die erfindungsgemäß verbleibende Randdicke hₘᵢₙ gewährleistet ist.

Hierzu kann es von Vorteil sein, **wenn** die Nebenfläche Teil des Brillenglases ist und im Bereich des Zylinderradius r_{Z} und/oder im Bereich des Basisradius r_{B} vorgesehen wird. Somit kann die Dicke des Glases weiter optimiert werden. In den kritischen Randbereichen, in denen der Rand zu dünn würde, ist das Aufmaß der Nebenfläche vorgesehen. Insbesondere bei großen Gläsern ist dies für den optischen Eindruck beim Tragen nicht von Nachteil.

Gelöst wird die Aufgabe auch dadurch, **dass** die Rezeptfläche aufgrund der Größe nur über einen Teil des Durchmessers D_{B} hergestellt wird, wobei abweichend von der Krümmung der Rezeptfläche in den Bereichen der Rückseite, in denen aufgrund der Generierung des Zylinderradius r_{Z} der Rand dicker werden würde als eine Dicke h_{B} des Randes des Halbzeugs in einer Ebene E_{B} des Basisradius r_{B}, die Dicke reduziert wird, so dass die Dicke des so gebildeten Halbzeugs an keiner Stelle das Höchstmaß h_{B} überschreitet. Hierdurch wird erreicht, dass der so bearbeitete Rohling bzw. das Halbzeug leichter wird und vor allem im Randbereich flacher wird. In den Randbereichen, in denen die Rezeptfläche nicht ausgebildet wird, werden die maximale Randhöhe und damit die sich über einen Umfang ergebenden Höhenunterschiede minimiert bzw. abgetragen. Dies hat die zum Plus-Glas beschriebenen Vorteile betreffend die Bearbeitungsfrequenz des oszillierenden Schneidwerkzeugs. Die Rezeptfläche wird dabei entweder größer als die gewünschte Größe des Brillenglases oder, bei großen Brillengläsern, kleiner als die gewünschte Größe des Brillenglases, wobei dann die Nebenfläche Teil der fertigen Brillenglasfläche ist. Der Durchmesser D ist also der gewünschten Größe des Brillenglases nach angepasst bzw. berechnet.

Hierzu kann es von Vorteil sein, **wenn** der Rohling zwecks Reduktion des Durchmessers auf einen Durchmesser D = D_{B} des Halbzeugs reduziert wird, wobei der Durchmesser D_{B} derart gewählt wird, dass die Herstellung einer gewünschten Größe des Brillenglases (1), mit oder ohne integrierter Nebenfläche gewährleistet ist. Abweichend von der vorstehend beschriebenen Verfahrensweise ist die Anpassung an eine vorbekannte Brillenglasgröße bzw. Brillenglasform mit den meisten Vorteilen verbunden. Die Minimierung der Masse und der Randhöhe sowie die damit einhergehende Abflachung werden damit am größten.

Bezüglich der Plus- und der Minus-Brillengläser kann es von Vorteil sein, **wenn** der Rohling auf einen Durchmesser D = Dₘᵢₙ reduziert wird, wobei Dₘᵢₙ vorzugsweise einen von der Größe des Brillenglases unabhängigen Wert zwischen 30 mm und 90 mm hat oder 40 mm, 50 mm, 60 mm, 70 mm oder 80 mm groß ist. Sofern das gewünschte Brillenglas eine gewisse Grundgröße wie beispielsweise 30 mm unterschreitet, ist es erfindungsgemäß vorgesehen, den Durchmesser des Rohlings auf ein größeres Maß zu standardisieren - wenn er dies nicht ohnehin aufweist. Die an die Rezeptfläche anschließende Neben- bzw. Übergangsfläche wird damit etwas größer. Bei Plus-Gläsern erhält die Nebenfläche die erforderliche Mindestdicke, es wird also das Aufmaß berücksichtigt, damit der zu bearbeitende Rohling nicht zu dünn wird und rund bleibt. Bei Minus-Gläsern wird die Übergangsfläche auf das maximal notwendige Dickenmaß begrenzt, damit der Rohling rund und leichter ist. In beiden Fällen führt dies zu einer erfindungsgemäßen Abflachung des an die Rezeptfläche anschließenden Randbereichs und zu den damit einhergehenden, vorgehend beschriebenen Vorteilen.

Hierzu kann es von Vorteil sein, **wenn** zwischen der Rezeptfläche und der durch die Abweichung von der Rezeptfläche gebildeten Übergangsfläche ein stetiger Übergang oder eine Zwischenfläche vorgesehen wird.

Vorteilhaft kann es auch sein, **wenn** die Dicke des hergestellten Halbzeugs im Bereich der Übergangsfläche konstant und gleich dem Höchstmaß h_{B} wird.

Vorteilhaft ist es auch, **wenn** die radiale Ausdehnung A_{Z} der Übergangsfläche im Bereich des Zylinderradius r_{Z} größer wird als im Bereich des Basisradius r_{B} .

**Hierzu kann es vorteilhaft sein, wenn** die Ausdehnung A_{Z} über den Umfang unterschiedlich groß und/oder sichelförmig ausgebildet wird.

Zudem kann es vorteilhaft sein, **wenn** die Übergangsfläche einen Krümmungsradius r_{U} aufweist, wobei der Krümmungsradius r_{U} größer ist als der jeweilige Krümmungsradius r_{R} der Rezeptfläche. Der stetige Übergang gewährleistet dieselben Vorteile wie oben zu den Plus-Brillengläsern bereits ausgeführt. Insbesondere beim Polieren wird ein An- bzw. Abheben des Polierwerkzeugs vermieden. Das Polierwerkzeug weist teilweise einen Durchmesser auf, der 25% bis 50% des Rohling- bzw. Halbzeugdurchmessers beträgt, so dass die aus dem Stand der Technik bekannte Randkrümmung einen erwünschten Polierdruck des Polierwerkzeugs im Randbereich der Rezeptfläche verhindert.

Dabei kann es in vorteilhafter**w**eise vorgesehen sein, **dass** aus dem Halbzeug ein Minus-Glas hergestellt wird, wobei die Dicke h_{M} in der Mitte des Brillenglases optimiert wird. Für ein Minus-Glas ist in entsprechender Weise zum Plus-Glas die Randdicke zu minimieren und die Dicke h_{M} in der Mitte zu optimieren.

Hierzu kann es vorteilhaft sein, **wenn** die **Neben- oder** Übergangsfläche Teil des Brillenglases ist und im Bereich des Zylinderradius r_{Z} und/oder im Bereich des Basisradius r_{B} vorgesehen wird. Die Randdicke des Brillenglases wird abweichend von der durch den Zylinderradius r_{Z} und/oder den Basisradius r_{B} vorgegebenen Dicke, dünner ausgestaltet. Die Rezeptfläche des Brillenglases endet demnach an der Grenze zu der Übergangsfläche.

**Vorteilhaft ist auch** ein Verfahren zum Herstellen eines Plus-Brillenglases, bei dem ein Rohling mit einem Durchmesser D_{R} mit einer einen Krümmungsradius r_{V} aufweisenden ersten Seite zwecks Bearbeitung der zweiten Seite auf der ersten Seite aufgeblockt und einer spanenden Bearbeitung zugeführt wird, wobei der Rohling und das Halbzeug nur drehend bearbeitet werden und für den Rohling und das Halbzeug die runde Form beibehalten wird, wobei zwecks Optimierung der Dicke eines Randes des Halbzeugs und des Brillenglases eine ein Aufmaß aufweisende Nebenfläche vorgesehen wird. Somit werden die mit einer optimierten Brillenglasdicke einhergehenden Nachteile eines zu dünnen Randes trotz Beibehaltung der runden Form vermieden.

Weitere Vorteile und Einzelheiten der Erfindung sind in den Patentansprüchen und in der Beschreibung erläutert und in den Figuren dargestellt. Es zeigen:
- Figur 1: einen Rohling 3 in perspektivischer Ansicht für Plus-Gläser sowie die Draufsicht inkl. der Schnittdarstellungen bezüglich des Basis- und Zy- linderradius r_{B}, r_{Z};
- Figur 2: die darstellende Draufsicht gemäß Figur 1 mit skizziertem Brillenglas in verkleinerter Ausfüh- rung;
- Figur 3: die darstellende Draufsicht gemäß Figur 1 mit Brillenglas in verkleinerter Ausführung;
- Figur 4: die Darstellung gemäß Figur 1 für Minus-Gläser mit skizziertem Brillenglas;

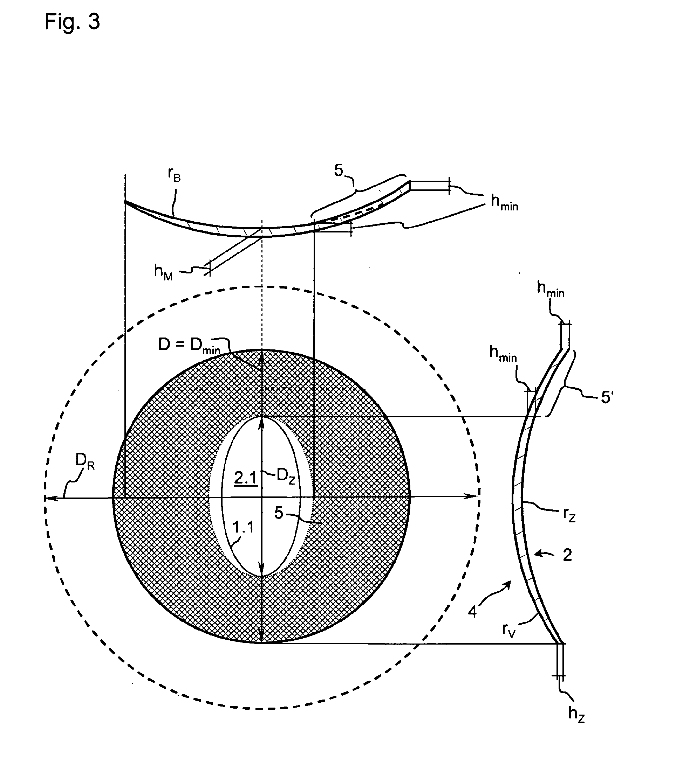

- Figur 3: die Darstellung gemäß Figur 1 für Minus-Gläser mit skizziertem Brillenglas in verkleinerter Ausfüh- rung;

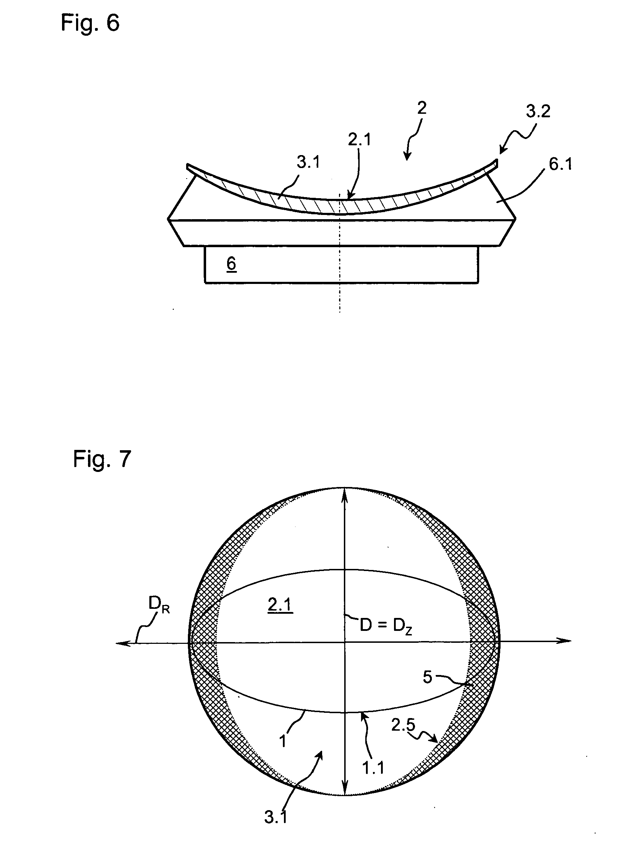

- Figur 6: das Halbzeug im Schnitt mit Blockstück und Block- mittel;

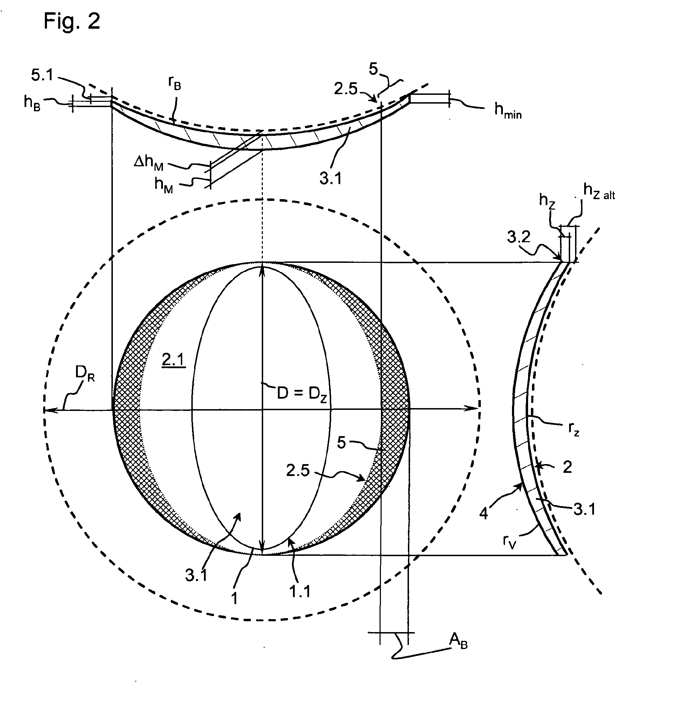

- Figur 7: das Halbzeug gemäß Figur 2 mit skizziertem Bril- lenglas in variierter Lage.

Ein in Figur 1 oben perspektivisch dargestellter Rohling 3, aus dem durch drehende Bearbeitung einer Rückseite 2 ein Halbzeug 3.1 hergestellt wird, weist eine vor geformte, konkave Vorderseite 4 auf, über der er zwecks Bearbeitung über ein Blockstück 6 sowie ein Blockmittel 6.1 gemäß Figur 3 in einer nicht dargestellten Werkstückaufnahme angeordnet ist. Innerhalb des perspektivisch dargestellten Rohlings 3 ist die Form des Halbzeugs 3.1 gemäß Draufsicht in Figur 1 bzw. der jeweiligen rechten und oberen Schnittdarstellung skizziert. Das Halbzeug 3.1 entsteht durch drehende Bearbeitung des Rohlings 3 zwecks Herstellung einer Linse 1 bzw. eines Brillenglases 1 wie in Figur 2 skizziert.

Der Rohling 3 wird ausgehend von dem in der Draufsicht skizzierten Durchmesser D_{R} auf einen Durchmesser D_{Z} reduziert, wobei der Rohling 3 bzw. das somit zumindest teilweise hergestellte Halbzeug 3.1 nach Bearbeitung der konkaven Rückseite 2 bzw. nach Generierung einer Rezeptfläche 2.1 unter Berücksichtigung des zu bildenden Zylinderradius r_{Z} gemäß der Schnittdarstellung auf der rechten Seite in einem Randbereich 3.2 eine Dicke bzw. Höhe h_{Z} aufweist. Die Höhe h_{Z} entspricht einer Höhe hₘᵢₙ und gewährleistet für die nachfolgenden Bearbeitungsschritte, insbesondere das Polieren, die Stabilität des Randes 3.2, so dass eine Verformung des Randes 3.2 oder ein Ausbrechen des Randes 3.2 verhindert wird.

Bei torischen Flächen ist dem jeweiligen Zylinderradius r_{Z} ein um 90 ° versetzt angeordneter Basisradius r_{B} gemäß oberer Schnittdarstellung zugeordnet. Da der Basisradius r_{B} und der Zylinderradius r_{Z}, insbesondere bei den hier dargestellten Plus-Linsen 1, größer sind als ein Krümmungsradius r_{V} der Vorderseite 4, verjüngt sich der Querschnitt der Linse 1 gemäß der Schnittdarstellungen ausgehend von der Mitte nach außen. Da der Basisradius r_{B} auch größer ist als der Zylinderradius r_{Z}, würde das Halbzeug 3.1 wie in der oberen Schnittdarstellung auf der linken Seite gezeigt am Rand 3.2 in einer Ebene E_{B} des Basisradius r_{B} flacher bzw. spitz auslaufen, also eine sehr geringe Dicke h_{B} aufweisen. Gemäß oberer Schnittdarstellung, auf der rechten Seite, ist diese spitz auslaufende Form mit der Dicke h_{B} gestrichelt dargestellt. In diesem kritischen Randbereich 3.2 ist ausgehend von einem Rand 2.5 der Rezeptfläche 2.1, an dem die Dicke hₘᵢₙ noch gewährleistet ist, ein erfindungsgemäßes Aufmaß 5.1 bzw. eine durch das Aufmaß gebildete Nebenfläche 5 vorgesehen, so dass am Rand 3.2 die Dicke hₘᵢₙ gegeben ist. Die Dicke hₘᵢₙ nimmt ausgehend vom Rand 2.5 der Rezeptfläche 2.1 bis zum Rand 3.2 demnach nicht weiter ab. Ausgehend von dem eigentlich zu generierenden Basisradius r_{B} der Rezeptfläche 2.1 wird somit im Randbereich 3.2, angrenzend an die Rezeptfläche 2.1, eine zusätzliche Nebenfläche 5 belassen, die das Aufmaß 5.1 aufweist, welches im Ausführungsbeispiel die Dicke hₘᵢₙ am Rand 3.2 aufweist. Ausgehend von der Dicke des Halbzeugs 3.1 am Rand der Rezeptfläche 2.1, im Übergangsbereich zu der Nebenfläche 5 kann die Dicke des Halbzeugs 3.1 aufgrund der Ausbildung des Krümmungsradius der Nebenfläche 5 geringer sein als die Dicke hₘᵢₙ am Rand 3.2. Somit wird ein dünnste Stelle S des Halbzeugs 3.1 generiert. Bestenfalls weist die Nebenfläche 5 die konstante Dicke hₘᵢₙ auf, die gleich der Dicke h_{Z} am Rand 3.2 ist. Die dünnste Stelle S ist dann die Nebenfläche 5 mit der Dicke hₘᵢₙ.

Der Übergang zwischen der Rezeptfläche 2.1 und der Nebenfläche 5 stellt dabei den ovalförmigen Rand 2.5 der inneren Rezeptfläche als Grenze zur Nebenfläche 5 bzw. der somit überdeckten äußeren Rezeptfläche dar. Der Übergang zwischen der Rezeptfläche 2.1 und der Nebenfläche 5 ist vorzugsweise stetig, wobei ein Grundradius r_{N} der Nebenfläche 5 in der Regel kleiner ist als der Basisradius r_{B} bzw. der sich jeweils durch Überlagerung von Basis- und Zylinderradius r_{B}, r_{Z} ergebende Radius der Rezeptfläche 2.1. Der Übergang zwischen der Rezeptfläche 2.1 und der Nebenfläche 5 kann auch in Form einer zusätzlichen Übergangsfläche gestaltet sein, um die Stetigkeit der Fläche zu gewährleisten. Gemäß der Draufsicht in Figur 1 weist die so generierte Nebenfläche 5 eine sichelförmige Form auf, die sich aus der Überlagerung des kreisrunden Randes 3.2 des Halbzeugs 3.1 mit dem Rezeptflächenrand 2.5 ergibt. Die radiale Ausdehnung A_{B} der Nebenfläche 5 variiert über den Umfang und ist im Bereich des Basisradius r_{B} maximal. Somit ergibt sich ausgehend von der in der Ebene E_{B} des Basisradius r_{B} bestehenden Dicke hₘᵢₙ-h_{B} des Halbzeuges 3.1 das Aufmaß 5.1, dessen Höhe zu einer Ebene E_{Z} des Zylinderradius r_{Z} hin stetig abnimmt.

Das so gebildete Halbzeug 3.1 weist eine kreisrunde Form mit ausreichend großem Durchmesser D_{Z} auf, die eine optimale Weiterbearbeitung einer insoweit beliebigen Rezeptfläche 2.1 des Halbzeugs 3.1 bis zum fertigen Brillenglas 1 gemäß Figur 2 gewährleistet. Die Größe des Brillenglases 1 ist jedoch auf den Durchmesser D_{Z} beschränkt.

Ausgehend von dem in Figur 1 dargestellten Halbzeug 3.1 und den darin aufgezeigten Randdicken h_{Z} bzw. hₘᵢₙ ist gemäß Figur 2 die erwünschte Form 1.1 eines Brillenglases 1 berücksichtigt.

Die Form 1.1 des Brillenglases 1 ist deutlich kleiner als die Form des Halbzeugs 3.1 gemäß Figur 1. Dementsprechend kann der Durchmesser D_{R} des Rohlings 3 deutlich weiter auf den für das Brillenglas 1 notwendigen Durchmesser D_{Z} reduziert werden. Aufgrund der weiteren Reduktion des Durchmessers D_{Z} und aufgrund des Annäherungsverhaltens des Krümmungsradius r_{V} der Vorderseite 4 und des Zylinderradius r_{Z} ergibt sich gemäß rechter Schnittdarstellung eine deutlich höhere Randdicke h_{Zalt}, die jedoch insgesamt zu einem dickeren und somit schwereren Brillenglas 1 führen würde. Demgemäß wird bei der Generierung des Zylinderradius r_{Z} die gewünschte Randdicke h_{Z} berücksichtigt, so dass das Halbzeug 3.1 aufgrund der Berücksichtigung der Brillen- bzw. Brillenglasform 1.1 insgesamt und insbesondere die Dicke h_{M} in der Mitte um das Maß Δh_{M} dünner ausfällt.

Gemäß der oberen Schnittdarstellung zu Figur 2 ist im rechten Randbereich entsprechend die Nebenfläche 5 vorgesehen, so dass die Randhöhe hₘᵢₙ das gewünschte Mindestmaß, insbesondere die Dicke h_{Z}, nicht unterschreitet. Die sich eigentlich ergebende und zur Verdeutlichung dargestellte Randhöhe h_{B} auf der linken Seite der oberen Schnittdarstellung ist ohne Generierung des erfindungsgemäßen Aufmaßes 5.1 deutlich kleiner als die gewünschte Mindestrandhöhe hₘᵢₙ.

Die in der Mitte des so gebildeten Halbzeugs 3.1 erreichbare Dicke h_{M} wird durch die maximale Reduktion des Durchmessers D_{Z} unter Berücksichtigung einer maximal zulässigen Randhöhe h_{Z} auf das Maß h_{M} reduziert, wobei ausgehend von Ausführungsbeispiel Figur 1 eine Reduktion der Dicke in der Glasmitte um das Δ h_{M} erreicht wird.

In der Verfahrensweise gemäß Ausführungsbeispiel Figur 3 wurde der Rohling 3 bzw. das Halbzeug 3.1 in der Durchmessergröße D = Dₘᵢₙ belassen, wobei dieser Mindestdurchmesser Dₘᵢₙ größer ist als der für die Brillenglasform 1.1 notwendige Durchmesser. Bei der Brillenglasform 1.1 handelt es sich um eine relativ kleine Brillenglasform 1.1, deren Handhabung auf Basis eines entsprechend kleinen Rohlings 3 bzw. Halbzeugs 3.1 sehr schwierig wäre. Deshalb wurde der Rohling 3 in der Größe des Mindestdurchmessers Dₘᵢₙ belassen. Da es sich ebenfalls um ein Plus-Brillenglas 1 handelt, wurde zwecks Gewährleistung der Randdicke hₘᵢₙ das erfindungsgemäße Aufmaß 5.1 entsprechend den vorgehend beschriebenen Ausführungsbeispielen im Randbereich 3.2 belassen, wobei das Aufmaß 5.1 in diesem Fall einen wesentlich größeren Flächenanteil des Halbzeugs 3.1 einnimmt als in dem Fall gemäß den Ausführungsbeispielen 1 und 2, in welchen das Halbzeug 3.1 bzw. dessen Durchmesser D in etwa dem zu erwartenden Durchmesser bzw. der Größe der Brillenglasform 1.1 entspricht.

Gemäß oberer Schnittdarstellung der Figur 3 würde das Halbzeug 3.1 unter Voraussetzung einer optimierten mittleren Glasdicke h_{M} zum Rand hin spitz auslaufen bzw. den Mindest-durchmesser Dₘᵢₙ zumindest bezüglich der Ebene E_{B} des Basisradius r_{B} nicht aufweisen können. Gemäß rechter Schnittdarstellung würde zumindest wie am unteren Ende zu sehen die Höhe h_{Z} des Randes in der Ebene E_{Z} des Zylinderradius r_{Z} erreicht werden. Diese Höhe h_{Z} wäre dennoch kleiner als das Mindestmaß hₘᵢₙ, wonach gemäß rechter Schnittdarstellung, oberes Ende, eine entsprechende Nebenfläche 5' mit einem Aufmaß 5.1' im Randbereich 3.2 vorgesehen ist, welches die Randhöhe hₘᵢₙ gewährleistet.

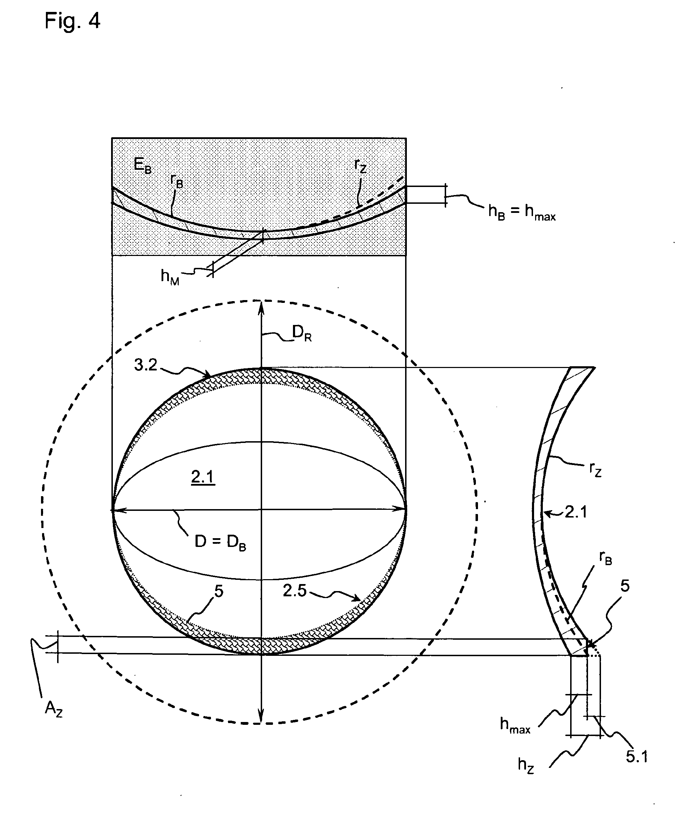

Gemäß Ausführungsbeispiel Figur 4 wird die erfindungsgemäße Verfahrensweise für ein Minus-Glas 1 dargestellt. Ausgehend von einer Dicke h_{M} des Halbzeugs 3.1 in der Mitte wird das Halbzeug 3.1 zum Rand 3.2 hin aufgrund der Krümmungsverhältnisse des Krümmungsradius r_{V} der Vorderseite und des Zylinder- bzw. Basisradius r_{Z}, r_{B} dicker.

Das Halbzeug 3.1 wird auf einen an die Größe der Brillenglasform 1.1 angepassten Durchmesser D_{B} reduziert, wobei der Durchmesser D_{B} auf die Randdicke bezogen ist, die sich in der Ebene E_{B} des Basisradius r_{B} ergibt, also die Randdicke h_{B} gemäß oberer Schnittdarstellung. Die Höhe h_{B} stellt dabei die wunschgemäß größte Randdicke dar, da abweichend von der Ebene E_{B} des Basisradius r_{B} die Randhöhe h_{B} stetig bis hin zu einer Randhöhe h_{Z} gemäß rechter Schnittdarstellung in einer Ebene E_{Z} des Zylinderradius r_{Z} ansteigt.

Zwecks Minimierung der Masse einerseits und zwecks Angleichung der Randhöhe insgesamt über den Umfang wird erfindungsgemäß ein Untermaß 5.1 vorgesehen und der sich über die Randhöhe h_{B} hinaus erstreckende Teil des Halbzeugs 3.1 abgeschnitten und somit eine an die Rezeptfläche 2.1 anschließende Übergangsfläche 5 generiert. Der Übergang zwischen der Rezeptfläche 2.1 und der Übergangsfläche 5 ist gemäß Darstellung in Figur 4 unstetig, d. h. es liegt eine Kante innerhalb der Gesamtfläche vor. Vorteilhafterweise ist an dieser Stelle ein stetiger Übergang vorzusehen, der jedoch einen Höhenunterschied zwischen der Dicke h_{B} und der sich ergebenden Dicke hₘₐₓ der Übergangsfläche 5 zur Folge haben würde.

Gemäß der Draufsicht in Figur 4 weist die so generierte Übergangsfläche 5 eine sichelförmige Form auf, die sich aus der Überlagerung des kreisrunden Randes 3.2 des Halbzeugs 3.1 mit dem Rezeptflächenrand 2.5 ergibt. Die radiale Ausdehnung A_{Z} der Übergangsfläche 5 variiert über den Umfang und ist im Bereich des Zylinderradius r_{Z} maximal.

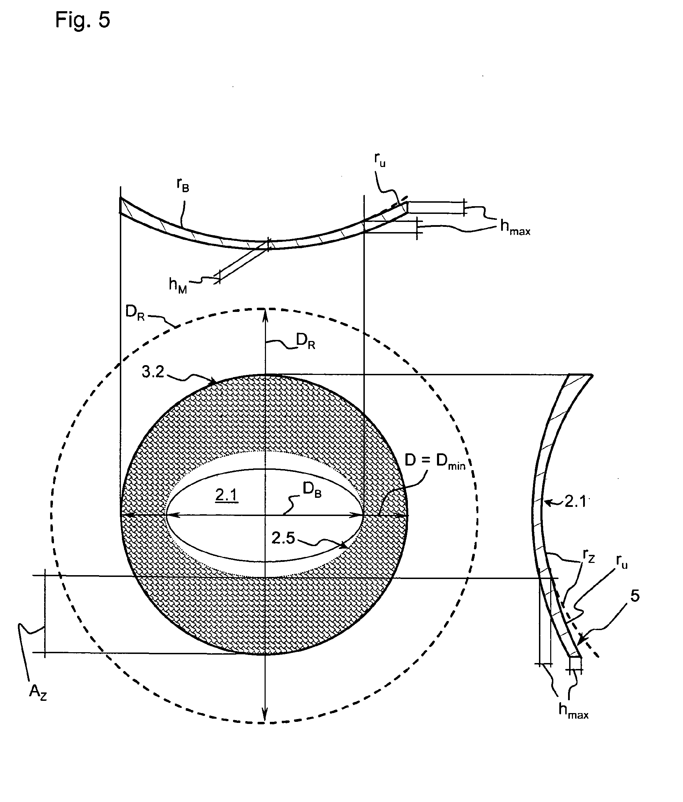

Wenn das herzustellende Brillenglas 1 deutlich kleiner wird, ist es gemäß Ausführungsform Figur 5 auch für Minus-Gläser 1 vorgesehen, den Rohling 3 bei einem Mindestdurchmesser Dₘᵢₙ zu belassen. Die sich damit ergebende Übergangsfläche 5, die an die Rezeptfläche 2.1 anschließt, erstreckt sich damit von dem Rand 2.5 der Rezeptfläche 2.1 bis zu dem Rand 3.2 des Halbzeugs 3.1. Die sich aufgrund des Mindestdurchmessers Dₘᵢₙ ergebende Randhöhe bzw. -dicke wird gemäß oberer und rechter Schnittdarstellung auf ein Maximalmaß hₘₐₓ reduziert, wobei zwischen der Übergangsfläche 5 und der Rezeptfläche 2.1, d. h. im Bereich des Rezeptflächenrandes 2.5, ein stetiger Übergang vorgesehen ist.

Gemäß Figur 6 wird der Rohling 3 bzw. das Halbzeug 3.1 und letztlich die fertige Linse 1 über das Blockstück 6 und das Blockmittel 6.1 in einer nicht dargestellten Werkstückaufnahme gehalten. Aufgrund vorgegebener Durchmesser der Blockstücke 6 und unter Berücksichtigung des erfindungsgemäß minimierten Durchmessers D und der Brillenglasform 1.1 ist das Blockmittel 6.1 betreffend den sich an der Vorderseite 4 ergebenden Durchmesser des Glases 1 angepasst bzw. dem Rand 3.2 nach ausgerichtet.

Gemäß Ausführungsbeispiel Figur 7 ist die Neben- oder Übergangsfläche 5 Teil des Brillenglases 1. Im Randbereich, wo die Dicke des Randes aufgrund der Optimierung der Glasdicke unvorteilhaft wäre, wird die Neben- oder Übergangsfläche 5 vorgesehen.

In nachgeschalteten Bearbeitungsschritten wird das so gebildete Halbzeug 3.1 bzw. die Rezeptfläche 2.1 poliert und der Randbereich zwecks Befestigung des so gebildeten Brillenglases 1 in einer Brillenfassung fräsend bearbeitet. Zur Herstellung des Halbzeugs 3.1 ist aufgrund der Beibehaltung der runden Form des Halbzeugs 3.1 ausschließlich eine drehende Bearbeitung ausrechend..Wenn die Randdicken kritisch, insbesondere zu dünn würden, wird die erfindungsgemäße Nebenfläche 5 mit dem Aufmaß 5.1 vorgesehen, damit die runde Form beibehalten werden kann.

### Bezugszeichenliste

- 1: Brillenglas, Linse, Plus-Glas, Minus-Glas
- 1.1: Brillenglasform
- 2: Rückseite
- 2.1: Rezeptfläche
- 2.5: Rand der Rezeptfläche, Rezeptflächenrand
- 3: Rohling
- 3.1: Halbzeug
- 3.2: Rand, Randbereich
- 4: Vorderseite
- 5: Nebenfläche, Übergangsfläche
- 5': Nebenfläche
- 5.1: Aufmaß, Untermaß
- 5.1': Aufmaß
- 6: Blockstück
- 6.1: Blockmittel

- A_{B}: Breite der Nebenfläche
- A_{Z}: Ausdehnung des Nebenfläche
- D: Durchmesser des Rohlings, reduziert
- D_{B}: Durchmesser des Rohlings, reduziert
- Dₘᵢₙ: Mindest-Durchmesser des Rohlings, Halbzeugs
- D_{R}: Durchmesser des Rohlings, ursprünglich
- D_{Z}: Durchmesser des Rohlings, reduziert
- E_{B}: Ebene des Basisradius
- E_{Z}: Ebene des Zylinderradius
- h_{B}: Dicke bzw. Höhe des Randes in der Ebene des Basisradius
- hₘₐₓ: Maximalmaß
- hₘᵢₙ: Mindestmaß für die Dicke bzw. Höhe des Randes
- h_{M}: Dicke bzw. Höhe in der Mitte
- h_{Z}: Dicke / Höhe des Randes in der Ebene des Zylinderradius
- h_{Zalt}: Randdicke alt
- r_{B}: Basisradius
- r_{N}: Krümmungsradius der Nebenfläche
- r_{U}: Krümmungsradius der Übergangsfläche
- r_{V}: Krümmungsradius der Vorderseite, Grundkrümmung
- r_{Z}: Zylinderradius
- S: dünnste Stelle

## Patentansprüche

1. Verfahren zum Herstellen eines Halbzeugs (3.1) für ein Plus-Brillenglases (1) mit einer torisch oder a-torisch geformten, als Rezeptfläche (2.1) ausgebildeten Rückseite (2), bei dem
a) ein Rohling (3) mit einem Durchmesser D_{R} mit einer einen Krümmungsradius r_{V} aufweisenden Vorderseite (4) zwecks Bearbeitung der Rückseite (2) auf der Vorderseite (4) aufgeblockt und einer spanenden Bearbeitung zugeführt wird,
**dadurch gekennzeichnet, dass**
b) die Rezeptfläche (2.1) nur über einen Teil des Durchmessers D hergestellt wird, wobei abweichend von der Krümmung der Rezeptfläche (2.1) in den Bereichen der Rückseite (2), in denen aufgrund der Generierung des Basisradius r_{B} die Dicke h_{B} des Randes (3.2) kleiner werden würde als ein Mindestmaß hₘᵢₙ, ein Aufmaß (5.1) belassen und damit eine Nebenfläche (5) erzeugt wird, so dass die Dicke des hergestellten Halbzeugs (3.1) an keiner Stelle das Mindestmaß hₘᵢₙ unterschreitet und
c) die Dicke h_{B} des Randes (3.2) maximal fünf mal so groß wird wie eine dünnste Stelle S des Halbzeugs (3.1).

2. Verfahren nach Anspruch 1 oder 2,
**dadurch gekennzeichnet,**
**dass** der Rohling (3) auf einen Durchmesser D = D_{Z} des Halbzeugs (3.1) reduziert wird, wobei der Durchmesser D_{Z} derart gewählt wird, dass unter Berücksichtigung der Größe der zu generierenden Rezeptfläche (2.1) eine Dicke h_{Z} des Randes (3.2) des Halbzeugs (3.1) in einer Ebene E_{Z} des Zylinderradius r_{Z} das für die Bearbeitung erforderliche Mindestmaß hₘᵢₙ nicht unterschreitet.

3. Verfahren nach einem der vorhergehenden Ansprüche,
**dadurch gekennzeichnet,**
**dass** für das Mindestmaß hₘᵢₙ eine Größe zwischen 0,3 mm und 2 mm oder 1 mm vorgegeben wird.

4. Verfahren nach einem der vorhergehenden Ansprüche,
**dadurch gekennzeichnet,**
**dass** die Dicke h_{B} des Randes (3.2) des Halbzeugs (3.1) in der Ebene E_{B} des Basisradius r_{B} das Maß 2 mm bis 6 mm nicht überschreitet.

5. Verfahren nach einem der vorhergehenden Ansprüche,
**dadurch gekennzeichnet,**
**dass** die Dicke h_{B} des Randes (3.2) des Halbzeugs (3.1) in der Ebene E_{B} des Basisradius r_{B} maximal zwei, drei oder vier mal so dick wird wie die dünnste Stelle S des Halbzeugs (3.1).

6. Verfahren nach einem der vorhergehenden Ansprüche,
**dadurch gekennzeichnet,**
**dass** die radiale Ausdehnung A_{B} der durch das Aufmaß (5.1) gebildeten Nebenfläche (5) im Bereich des Basisradius r_{B} größer wird als im Bereich des Zylinderradius r_{Z}.

7. Verfahren nach einem **der** vorhergehenden Ansprüche,
**dadurch gekennzeichnet,**
**dass** die Nebenfläche (5) einen Krümmungsradius r_{N} aufweist, wobei der Krümmungsradius r_{N} kleiner ist als der Krümmungsradius der Rezeptfläche (2.1).

8. Verfahren zum Herstellen eines Halbzeugs (3.1) für ein Minus-Brillenglas (1) mit einer torisch oder a-torisch geformten, als Rezeptfläche (2.1) ausgebildeten Rückseite (2), bei dem
a) ein Rohling (3) mit einem Durchmesser D_{R} mit einer einen Krümmungsradius r_{V} aufweisenden Vorderseite (4) zwecks Bearbeitung der Rückseite (2) auf der Vorderseite (4) aufgeblockt und einer spanenden Bearbeitung zugeführt wird,
**dadurch gekennzeichnet, dass**
b) die Rezeptfläche (2.1) nur über einen Teil des Durchmessers D hergestellt wird, wobei abweichend von der Krümmung der Rezeptfläche (2.1) in den Bereichen der Rückseite (2), in denen aufgrund der Generierung des Zylinderradius r_{Z} der Rand (3.2) dicker werden würde als eine Dicke h_{B} des Randes (3.2) des Halbzeugs (3.1) in einer Ebene E_{B} des Basisradius r_{B}, die Dicke reduziert wird, so dass die Dicke des so gebildeten Halbzeugs (3.1) an keiner Stelle das Höchstmaß h_{B} überschreitet.

9. Verfahren nach Anspruch **8,**
**dadurch gekennzeichnet,**
**dass** der Rohling (3) auf einen Durchmesser D = D_{B} des Halbzeugs (3.1) reduziert wird, wobei der Durchmesser D_{B} derart gewählt wird, dass die Herstellung einer gewünschten Größe des Brillenglases (1) gewährleistet ist.

10. Verfahren nach einem der Ansprüche 1, 3 bis **9,**
**dadurch gekennzeichnet,**
**dass** der Rohling (3) auf einen Durchmesser D = Dₘᵢₙ reduziert wird, wobei Dₘᵢₙ einen Wert zwischen 30 mm und 90 mm hat.

11. Verfahren nach einem der Ansprüche **8** bis **10,**
**dadurch gekennzeichnet,**
**dass**
die radiale Ausdehnung A_{Z} der Übergangsfläche (5) im Bereich des Zylinderradius r_{Z} größer wird als im Bereich des Basisradius r_{B}.

12. Verfahren nach einem der Ansprüche **8** bis **11,**
**dadurch gekennzeichnet,**
**dass** die Übergangsfläche (5) einen Krümmungsradius r_{U} aufweist, wobei der Krümmungsradius r_{U} größer ist als der jeweilige Krümmungsradius der Rezeptfläche (2.1).

13. Verfahren nach einem der Ansprüche **8** bis **12,**
**dadurch gekennzeichnet,**
**dass** aus dem Halbzeug (3.1) ein Minus-Glas (1) hergestellt wird, wobei eine Dicke h_{M} in der Mitte des Brillenglases (1) optimiert wird.

14. Verfahren nach **einem der Ansprüche 1 bis 7 oder 8 bis 13,**
**dadurch gekennzeichnet,**
**dass** die **Neben- oder** Übergangsfläche (5) Teil des Brillenglases (1) ist und im Bereich des Zylinderradius r_{Z} und/oder im Bereich des Basisradius r_{B} vorgesehen wird.

15. Verfahren nach Anspruch 6 oder 11,
**dadurch gekennzeichnet,**
**dass** eine Ausdehnung A_{B} über den Umfang unterschiedlich groß und/oder sichelförmig ausgebildet wird.

## Claims

1. A method for manufacturing a semi-finished product (3.1) for a convex spectacle glass (1) having a toric or non-toric back side (2) which is designed as a prescription surface (2.1), in which
a) a blank (3) having a diameter D_{R} and comprising a front side (4) having a radius of curvature r_{V} is mounted on said front side (4) and subjected to a machining operation in order to machine the back side (2) **characterized in that**
b) the prescription surface (2.1) is only generated over a part of the diameter D, wherein, deviating from the curvature of the prescription surface (2.1), an excess thickness (5.1) is allowed to remain, thus creating an ancillary surface (5), in those areas of the back side (2) where, due to the generation of the base radius r_{B}, the thickness h_{B} of the rim (3.2) would be less than a minimum dimension hₘᵢₙ, so that the thickness of the semi-finished product (3.1) thus manufactured is not less than said minimum dimension hₘᵢₙ in any place, and
c) the thickness h_{B} of the rim (3.2) is not more than five times that of a thinnest point S of the semi-finished product (3.1).

2. A method according to claim 1
**characterized in that**
the blank (3) is reduced to a diameter D = D_{Z} of the semi-finished product (3.1), wherein the diameter D_{Z} is selected such that, taking into account the size of the prescription surface (2.1) to be generated, a thickness h_{Z} of the rim (3.2) of the semi-finished product (3.1) in a plane E_{Z} of the cylinder radius r_{Z} is not less than the minimum dimension hₘᵢₙ which is required for machining.

3. A method according to any one of the preceding claims,
**characterized in that**
a dimension ranging between 0.3 mm and 2 mm or 1 mm is specified as the minimum dimension hₘᵢₙ.

4. A method according to any one of the preceding claims,
**characterized in that**
the thickness h_{B} of the rim (3.2) of the semi-finished product (3.1) in the plane E_{B} of the base radius r_{B} does not exceed a dimension ranging from 2 mm to 6 mm.

5. A method according to any one of the preceding claims,
**characterized in that**
the thickness h_{B} of the rim (3.2) of the semi-finished product (3.1) in the plane E_{B} of the base radius r_{B} is not more than two, three, or four times that of the thinnest point S of the semi-finished product (3.1).

6. A method according to any one of the preceding claims,
**characterized in that**
the radial extent A_{B} of the ancillary surface (5) which is created due to the excess thickness (5.1) is larger in the area of the base radius r_{B} than in the area of the cylinder radius r_{Z}.

7. A method according to any one of the preceding claims,
**characterized in that**
the ancillary surface (5) has a radius of curvature r_{N}, wherein said radius of curvature r_{N} is smaller than the radius of curvature of the prescription surface (2.1).

8. A method for manufacturing a semi-finished product (3.1) for a concave spectacle glass (1) having a toric or non-toric back side (2) which is designed as a prescription surface (2.1), in which
a) a blank (3) having a diameter D_{R} and comprising a front side (4) having a radius of curvature r_{V} is mounted on said front side (4) and subjected to a machining operation in order to machine the back side (2) **characterized in that**
b) the prescription surface (2.1) is only generated over a part of the diameter D, wherein, deviating from the curvature of the prescription surface (2.1), the thickness is reduced in those areas of the back side (2) where, due to the generation of the cylinder radius r_{Z}, the rim (3.2) would be thicker than a thickness h_{B} of the rim (3.2) of the semi-finished product (3.1) in a plane E_{B} of the base radius r_{B}, so that the thickness of the semi-finished product (3.1) thus manufactured does not exceed said maximum dimension h_{B} in any place.

9. A method according to claim 8
**characterized in that**
the blank (3) is reduced to a diameter D = D_{B} of the semi-finished product (3.1), wherein the diameter D_{B} is selected such that the manufacture of a spectacle glass (1) having a desired size is ensured.

10. A method according to any one of claims 1, 3 to 9,
**characterized in that**
the blank (3) is reduced to a diameter D = Dₘᵢₙ, wherein Dₘᵢₙ ranges between 30 mm and 90 mm.

11. A method according to any one of claims 8 to 10,
**characterized in that**
the radial extent A_{Z} of the transition surface (5) is larger in the area of the cylinder radius r_{Z} than in the area of the base radius r_{B}.

12. A method according to any one of claims 8 to 11,
c h a r a c t e r i z e d i n t h a t
the transition surface (5) has a radius of curvature r_{U}, wherein said radius of curvature r_{U} exceeds the respective radius of curvature of the prescription surface (2.1).

13. A method according to any one of claims 8 to 12,
**characterized in that**
the semi-finished product (3.1) is used to manufacture a concave glass (1), wherein a thickness h_{M} in the centre of the spectacle glass (1) is optimized.

14. A method according to any one of claims 1 to 7 or 8 to 13,
**characterized in that**
the ancillary or transition surface (5) is a part of the spectacle glass (1) and is provided in the area of the cylinder radius r_{Z} and/or in the area of the base radius r_{B}.

15. A method according to claim 6 or 11,
**characterized in that**
an extent A_{B} varies in size or is sickle-shaped along the periphery.

## Revendications

1. Procédé de fabrication d'un produit semi-fini (3.1) pour un verre de lunettes à correction positive (1), avec un côté arrière (2) formé de façon torique ou atorique constitué en tant que surface de prescription (2.1), dans lequel
a) une ébauche (3) de diamètre D_{R} avec un côté avant (4) présentant un rayon de courbure r_{V} est bloqué sur le côté avant (4) en vue de l'usinage du côté arrière (2) et est conduit à un usinage par enlèvement de matière,
**caractérisé en ce que**
b) la surface de prescription (2.1) n'est réalisée que sur une partie du diamètre D, une surdimension étant laissée, en s'écartant de la courbure de la surface de prescription (2.1), dans les zones du côté arrière (2) dans lesquelles, du fait de la génération du rayon de base r_{B}, l'épaisseur h_{B} du bord (3.2) deviendrait plus petite qu'une cote minimale hₘᵢₙ, et une surface annexe (5) étant ainsi produite de sorte que l'épaisseur du produit semi-fini (3.1) réalisé ne descend en aucun endroit au-dessous de la cote minimale hₘᵢₙ et
c) l'épaisseur h_{B} du bord (3.2) est au maximum cinq fois plus grande qu'un endroit le plus mince S du produit semi-fini (3.1).

2. Procédé selon la revendication 1,
**caractérisé en ce que**
l'ébauche (3) est réduite à un diamètre D = D_{z} du produit semi-fini (3.1), le diamètre D_{z} étant choisi de sorte que, en prenant en compte la grandeur de la surface de prescription (2.1) à générer, une épaisseur h_{z} du bord (3.2) du produit semi-fini (3.1) dans un plan E_{z} du rayon de cylindre r_{z} ne passe pas sous la cote minimale hₘᵢₙ nécessaire pour l'usinage.

3. Procédé selon une des revendications précédentes,
**caractérisé en ce que**,
pour la cote minimale hₘᵢₙ, une grandeur entre 0,3 mm et 2 mm ou 1 mm est paramétrée.

4. Procédé selon une des revendications précédentes,
**caractérisé en ce que**
l'épaisseur h_{B} du bord (3.2) du produit semi-fini (3.1) dans le plan E_{B} du rayon de base R_{B} ne dépasse pas la dimension 2 mm à 6 mm.

5. Procédé selon une des revendications précédentes,
**caractérisé en ce que**
l'épaisseur h_{B} du bord (3.2) du produit semi-fini (3.1) dans le plan E_{B} du rayon de base R_{B} devient au maximum deux, trois ou quatre fois plus épaisse que l'endroit le plus mince S du produit semi-fini (3.1).

6. Procédé selon une des revendications précédentes,
**caractérisé en ce que**
la dilatation radiale A_{B} de la surface annexe (5) formée par la surdimension (5.1) devient plus grande dans la zone du rayon de base R_{B} que dans la zone du rayon de cylindre r_{z}.

7. Procédé selon une des revendications précédentes,
**caractérisé en ce que**
la surface annexe (5) présente un rayon de courbure r_{N}, le rayon de courbure r_{N} étant plus petit que le rayon de courbure de la surface de prescription (2.1).

8. Procédé de fabrication d'un produit semi-fini (3.1) pour un verre de lunettes à correction négative (1), avec un côté arrière (2) formé de façon torique ou atorique constitué en tant que surface de prescription (2.1), dans lequel
a) une ébauche (3) de diamètre D_{R} avec un côté avant (4) présentant un rayon de courbure rᵥ est bloqué sur le côté avant (4) en vue de l'usinage du côté arrière (2) et est conduit à un usinage par enlèvement de matière,
**caractérisé en ce que**
b) la surface de prescription (2.1) n'est réalisée que sur une partie du diamètre D, une surdimension étant laissée, en s'écartant de la courbure de la surface de prescription (2.1), dans les zones du côté arrière (2) dans lesquelles, du fait de la génération du rayon de cylindre r_{z}, le bord (3.2) deviendrait plus épais qu'une épaisseur h_{B} du bord (3.2) du produit semi-fini (3.1) dans un plan E_{B} du rayon de base R_{B}, l'épaisseur est réduite de sorte que l'épaisseur du produit semi-fini (3.1) ainsi formé ne dépasse la dimension maximale h_{B} en aucun endroit.

9. Procédé selon la revendication 8,
**caractérisé en ce que**
l'ébauche (3) est réduite à un diamètre D = D_{B} du produit semi-fini (3.1), le diamètre D_{B} étant choisi de sorte que la fabrication d'une grandeur souhaitée du verre de lunettes (1) est garantie.

10. Procédé selon une des revendications 1, 3 à 9,
**caractérisé en ce que**
l'ébauche (3) est réduite à un diamètre D = Dₘᵢₙ, Dₘᵢₙ ayant une valeur entre 30 mm et 90 mm.

11. Procédé selon une des revendications 8 à 10,
**caractérisé en ce que**
la dilatation radiale A_{z} de la surface de transition (5) devient plus grande dans la zone du rayon de cylindre r_{z} que dans la zone du rayon de base R_{B}.

12. Procédé selon une des revendications 8 à 11,
**caractérisé en ce que**
la surface de transition (5) présente un rayon de courbure r_{U}, le rayon de courbure r_{U} étant plus grand que le rayon de courbure respectif de la surface de prescription (2.1).

13. Procédé selon une des revendications 8 à 12,
**caractérisé en ce que,**
à partir du produit semi-fini (3.1), il est fabriqué un verre de correction négative (1), une épaisseur h_{M} étant optimisée au milieu du verre de lunettes (1).

14. Procédé selon une des revendications 1 à 7 ou 8 à 13,
**caractérisé en ce que**
la surface annexe ou de transition (5) fait partie du verre de lunettes (1) et est prévue dans la zone du rayon de cylindre r_{z} et/ou dans la zone du rayon de base R_{B}.

15. Procédé selon la revendication 6 ou 11,
**caractérisé en ce**
**qu'**une dilatation A_{B} est de dimension variable sur la périphérie et/ou est constituée en forme de faucille.
